# EUROPÄISCHE PATENTSCHRIFT

(11) **EP 1 125 463 B1**
(45) Veröffentlichungstag und Bekanntmachung des Hinweises auf die Patenterteilung: **28.01.2004**
(21) Anmeldenummer: 99959232.2
(22) Anmeldetag: 02.11.1999
(51) Int. Cl.: H04Q 7/38

(54) **VERFAHREN ZUR ANPASSUNG DER ZUR NACHBARKANALÜBERWACHUNG NÖTIGEN UNTERBRECHUNGSPAUSEN**
METHOD FOR ADAPTING INTERRUPTION PHASES REQUIRED FOR ADJACENT CHANNEL MONITORING
PROCEDE D'ADAPTATION DES PHASES D'INTERRUPTION NECESSAIRES POUR LA SURVEILLANCE DE CANAUX

(30) Priorität: 04.11.1998 DE 19850866
(43) Veröffentlichungstag der Anmeldung: 22.08.2001
(73) Patentinhaber: SIEMENS AKTIENGESELLSCHAFT, 80333 München (DE)
(72) Erfinder: RAAF, Bernhard, D-81475 München (DE)
(86) Internationale Anmeldenummer: PCT/DE1999/003498
(87) Internationale Veröffentlichungsnummer: WO 2000/027151

(56) Entgegenhaltungen:
- WO-A-92/10886
- WO-A-94/29981
- WO-A-97/25827
- US-A- 5 177 740

## Beschreibung

Die Erfindung betrifft eine Basisstation eine Mobilstation und ein Verfahren zur Datenübertragung in einem Kommunikationssystem, insbesondere in einem CDMA-Mobilfunksystem, wobei die Daten strukturiert in Rahmen derart übertragen werden, daß es einer Mobilstation möglich ist, während einer oder mehrerer Unterbrechungsphasen, in der bzw. in denen sie das Empfangen (der bisherigen Quelle oder der Daten der Basisstation) und/oder das Verarbeiten empfangener Daten oder das Senden unterbricht, andere Funktionen auszuführen, insbesondere über eine Empfangseinrichtung Messungen durchzuführen. Unter "Übertragen" wird im folgenden auch Senden und/oder Empfangen verstanden.

In Kommunikationssystemen werden Daten (beispielsweise Sprachdaten, Bilddaten oder Systemdaten) auf Übertragungsstrecken zwischen Basisstationen und Mobilstationen übertragen. Bei Funk-Kommunikationssystemen erfolgt dies mit Hilfe von elektromagnetischen Wellen über eine Luft- oder Funkschnittstelle. Dabei werden Trägerfrequenzen genutzt, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der dritten Generation sind Frequenzen im Frequenzband von 2.000 MHz vorgesehen.

Insbesondere in zukünftigen CDMA-Systemen wird beispielsweise in Abwärtsrichtung, das heißt in der Richtung von einer Basisstation zu einer Mobilstation, von der Basisstation im wesentlichen kontinuierlich gesendet. Die beim Senden übertragenen Daten sind üblicherweise in Rahmen strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. Die Struktur und/oder Länge jedes Rahmens in einer kontinuierlichen Folge von Rahmen ist jedoch vorgegeben und/oder wird durch die Mobilstation erkannt.

Insbesondere in zellularen Mobilfunksystemen muß die Mobilstation gelegentlich auch andere Funktionen als Datenempfang ausführen, die zumindest beim Betrieb nur einer einzigen Empfangseinrichtung nicht gleichzeitig ausgeführt werden können. Beispielsweise muß die Mobilstation in einem zellular aufgebauten Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt.

Um ohne Unterbrechung von der Basisstation zu der Mobilstation senden zu können, wurde bereits vorgeschlagen, die Mobilstation mit einer zweiten Empfangseinrichtung auszustatten. Aus Kostengründen wird diese Lösung in der Praxis jedoch meist abgelehnt.

Aus dem Dokument WO-A-94/29981 ist ein anderer Vorschlag bekannt, nach welchem die Basisstation das Senden zu vorgegebenen Zeiten unterbricht, um es der Empfangsstation zu ermöglichen, eine Nachbarkanalsuche (Suche nach einer benachbarten Basisstation oder nach von diesen Basisstationen ausgesendeten bestimmten Datenpaketen, worunter im folgenden auch Synchronisations-, Frequenzkorrektur- oder Pilotsignalbursts verstanden werden können) über ihre einzige Empfangseinrichtung durchzuführen.

Um einen Datenverlust zu vermeiden, sendet die Basisstation die Daten zuvor mit einer höheren Senderate als mit der im wesentlichen konstanten Dauer-Senderate. Damit dies nicht zu höheren Bitfehlerraten (BER) führt, muß zusätzlich während dieser Zeit die Sendeleistung erhöht werden.

Die Frequenz, mit der die Unterbrechungsphasen wiederkehren, und die Länge der Unterbrechungsphasen hängen von dem jeweiligen System und auch von dem jeweiligen Betriebszustand des Systems ab. Beispielsweise reichen für eine Nachbarkanalsuche einer Mobilstation in einem zellular organisierten Funk-Kommunikationssystem Unterbrechungsphasen mit jeweils einer Länge von jeweils 5 bis 6 ms aus. In Systemen mit HCS (Hierarchic Cell Structure) ist es ausreichend, eine Unterbrechungsphase etwa alle 100 ms stattfinden zu lassen. Da mit der Anzahl der eingefügten Unterbrechungsphasen auch die Einbußen in der Übertragungsqualität zunehmen, besteht der Wunsch, möglichst wenige Unterbrechungsphasen einzulegen.

Aufgabe der vorliegenden Erfindung ist es, ein Verfahren zur Datenübertragung der eingangs genannten Art, eine Mobilstation und eine Basisstation anzugeben, die bei guter Übertragungsqualität eine Beobachtung zweiter Basisstationen ermöglichen.

Die Aufgabe wird durch die unabhängigen Patentansprüche gelöst. Weiterbildungen sind Gegenstand der abhängigen Ansprüche.

Die Erfindung beruht demnach auf dem Gedanken, in Abhängigkeit von einem Empfangsergebnis, das während der Unterbrechungsphasen, in denen die Empfangseinrichtung auf den Empfang von Datenpaketen der zweiten Basisstationen geschaltet ist, erzielt wird, Informationen von der Mobilstation zur ersten Basisstation zu senden die das Einlegen von Unterbrechungsphasen beeinflussen.

Bei den von der zweiten Basisstation gesendeten Datenpaketen kann es sich auch um zu detektierende Datenpakete (Synchronisationsdatenpakete) oder charakteristische Datenpakete (Frequenzkorrekturdatenpakete) handeln.

Unter Beeinflussung des Einlegens von Unterbrechungsphasen versteht man auch eine Einschränkung der Anzahl zukünftiger Unterbrechungsphasen und/oder die Beendigung des Einlegens von Unterbrechungsphasen und/oder eine gesteuerte Fortsetzung des Einlegens weiterer Unterbrechungsphasen und/oder die Steuerung der Dauer der Unterbrechungsphasen.

Unter dem Begriff "die Mobilstation wird auf den Empfang von Datenpaketen geschaltet" versteht man im Rahmen dieser Anmeldung auch, daß nach der üblichen analogen und digitalen Filterung und gegebenenfalls einer Derotation das empfangene Datenpaket mit der der Trainingssequenz entsprechenden Korrelationsfolge verglichen (z.B. korreliert) wird und somit nach Datenpaketen gesucht wird. Statt einer Korrelation können ggf. auch andere Verfahren angewandt werden (z.B. FIR, IRR oder andere Filter). Falls ein Datenpaket mit ausreichender Qualität empfangen wird, detektiert wird oder die mittels des Datenpaketes transportierte Information mit ausreichender Qualität ermittelt wird etc., kann von einem positiven Empfangsergebnis hinsichtlich dieses Datenpaketes gesprochen werden.

Während also beispielsweise in Abwärtsrichtung Daten von einer ersten Basisstation zu einer Mobilstation gemäß einem ersten Übertragungsverfahren übertragen werden, werden zumindest während bestimmter Sendephasen Unterbrechungsphasen eingelegt, in denen die Mobilstation das Empfangen der von der ersten Basisstation gesendeten Daten und/oder das Verarbeiten der empfangenen Daten unterbricht, und in denen die Mobilstation auf den Empfang von Datenpakete, die von einer zweiten Basisstation gemäß einem zweiten Übertragungsverfahren gesendet werden, geschaltet wird. In Abhängigkeit von einem Empfangsergebnis bezüglich dieser von einer zweiten Basisstation gesendeten Datenpakete werden Informationen von der Mobilstation zur ersten Basisstation gesendet, die das Einlegen von Unterbrechungsphasen beeinflussen.

Bei einem ersten Übertragungsverfahren, das von einer ersten Basisstation verwendet wird, kann es sich dabei um ein CDMA-Verfahren handeln, und bei einem zweiten Übertragungsverfahren, das von einer zweiten Basisstation verwendet wird, um ein GSM-Verfahren handeln. So werden beispielsweise zur Beobachtung von GSM-Basisstationen in einer UMTS-Übertragung Unterbrechungsphasen eingelegt. Zur Reduzierung der Anzahl dieser Unterbrechungsphasen wird nach dem Empfang von für die Nachbarkanalsuche ausreichenden Informationen eine Nachricht von der Mobilstation zur UMTS-Basisstation übermittelt, um das Einlegen weiterer Unterbrechungsphasen zu beeinflussen oder einzuschränken.

So ist es möglich, das Einlegen von Unterbrechungsphasen möglichst bald zu beenden und somit möglichst einzuschränken, sobald genügend Informationen über die zu beobachtenden zweiten Basisstationen bekannt sind und somit die Übertragungsqualität zu verbessern.

Bei einer Ausführungsvariante der Erfindung wird nach dem Empfang eines charakteristischen Datenpaketes veranlaßt, daß nach dem Empfang eines folgenden zu detektierenden Datenpaketes keine Unterbrechungsphasen mehr eingefügt werden.

So ist es möglich, durch das Ausnutzen der bekannten Rahmenstruktur der Datenübertragung von der zweiten Basisstation zur Mobilstation die Anzahl der einzufügenden Unterbrechungsphasen gering zu halten.

Eine andere Weiterbildungsvariante der Erfindung sieht vor, daß die Mobilstation auf den Empfang von Datenpaketen mehrerer Basisstationen geschaltet wird, und in Abhängigkeit von den Empfangsergebnissen Informationen zur ersten Basisstation gesendet werden, die das Einlegen der Unterbrechungsphasen beeinflussen.

Dadurch wird erreicht, nacheinander mehrere Nachbarbasisstationen zu beobachten und nach deren ausreichender Beobachtung das Einlegen von Unterbrechungsphasen zunächst zu beenden.

Eine weitere Ausgestaltung der Erfindung sieht vor, die Informationen zur Beeinflussung des Einlegens der Unterbrechungsphasen und Informationen über zweite und/oder dritte Basisstationen mittels derselben Nachricht zu übermitteln.

Dies ermöglicht es, mit möglichst wenig Signalisierungsaufwand Nachbarbasisstationen zu beobachten und Informationen über die Beobachtungsergebnisse zu übermitteln.

Anhand der Zeichnungen werden nun Ausführungsbeispiele der Erfindung näher beschrieben. Die Erfindung ist jedoch nicht auf diese Ausführungsbeispiele beschränkt. Die einzelnen Figuren der Zeichnung zeigen:
- Fig. 1: Prinzipschaltbild eines Mobilfunksystems;
- Fig. 2: Prinzipschaltbild einer Mobilstation;
- Fig. 3: schematische Darstellung der Einfügung von Unterbrechungsphasen während einer Sendephase.

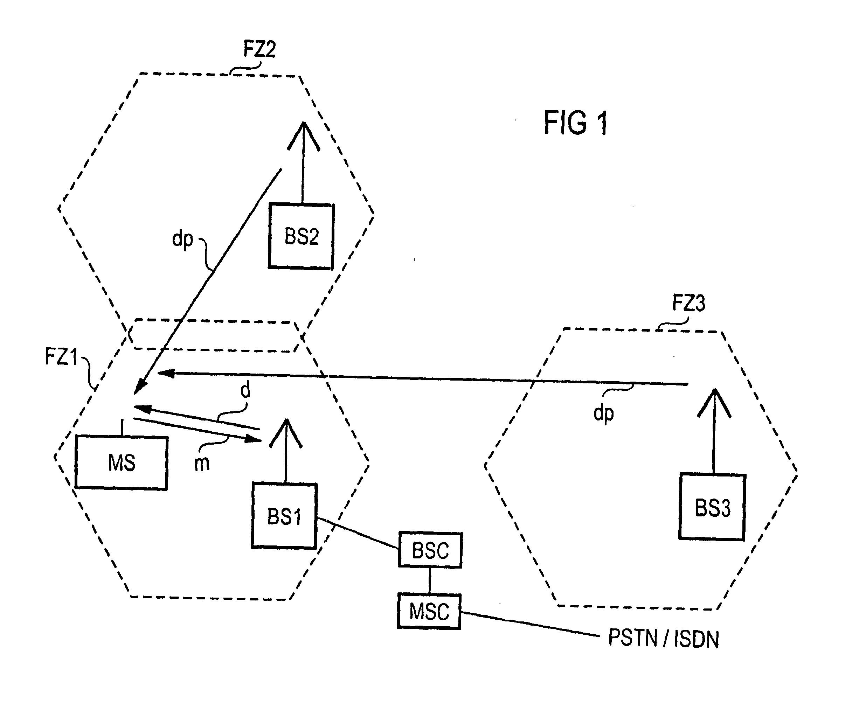

In Figur 1 ist ein zellulares Mobilfunknetz, das beispielsweise aus einer Kombination eines GSM (Global System for Mobile Communication)-Systems mit einem UMTS (Universal Mobile Telecommunication System) - System besteht, dargestellt, das aus einer Vielzahl von Mobilvermittlungsstellen MSC besteht, die untereinander vernetzt sind, bzw. den Zugang zu einem Festnetz PSTN/ISDN herstellen. Ferner sind diese Mobilvermittlungsstellen MSC mit jeweils zumindest einem Basisstationscontroler BSC verbunden, der auch durch ein Datenverarbeitungssystem gebildet sein kann.

Jeder Basisstationscontroler BSC ist wiederum mit zumindest einer Basisstation BS verbunden. Eine solche Basisstation BS ist eine Funkstation, die über eine Funkschnittstelle eine Funkverbindung zu anderen Funkstationen, sogenannten Mobilstationen MS aufbauen kann. Zwischen den Mobilstationen MS und der diesen Mobilstationen MS zugeordneten Basisstation BS können mittels Funksignale Informationen innerhalb von Funkkanälen, die innerhalb von Frequenzbändern liegen, übertragen werden. Die Reichweite der Funksignale einer Basisstation definieren im wesentlichen eine Funkzelle FZ.

Basisstationen BS und ein Basisstationscontroler BSC können zu einem Basisstationssystem zusammengefaßt werden. Das Basisstationssystem BSS ist dabei auch für die Funkkanalverwaltung bzw. -zuteilung, die Datenratenanpaßung, die Überwachung der Funküertragungsstrecke, Hand-Over-Prozeduren, und im Falle eines CDMA-Systems für die Zuteilung der zu verwendenden Spreizcodesets, zuständig und übermittelt die dazu nötigen Signalisierungsinformationen zu den Mobilstationen MS.

Im Falle eines Duplex-Systems können bei FDD (Frequency Division Duplex)-Systemen, wie beispielsweise dem GSM-System, für den Uplink (Mobilstation zur Basisstation) andere Frequenzbänder vorgesehen sein als für den Downlink (Basisstation zur Mobilstation) und bei TDD (Time Division Duplex)-Systemen, wie das DECT (Digital Enhanced Cordless Telecommunications)-System für den Up- bzw. Downlink unterschiedliche Zeitabschnitte vorgesehen sein. Innerhalb der unterschiedlichen Frequenzbänder können durch ein FDMA (Frequency Division Multiple Access) Verfahren mehrere Frequenzkanäle realisiert werden.

Im Rahmen dieser Anmeldung verwendete Begriffe und Beispiele beziehen sich auch oft auf ein GSM-Mobilfunksystem; sie sind jedoch keineswegs darauf beschränkt, sondern können anhand der Beschreibung von einem Fachmann auch leicht auf andere, gegebenenfalls zukünftige, Mobilfunksysteme wie CDMA-Systeme, insbesondere Wide-Band-CDMA-Systeme oder TD/CDMA-Systeme abgebildet werden. Unter erster Basisstation BS1 versteht man insbesondere eine UMTS-Basisstation oder eine CDMA-Basisstation, unter zweiten und/oder dritten Basisstationen BS2,BS3 insbesondere zu beobachtende GSM-(Nachbar)Basisstationen und unter Mobilstation insbesondere eine Dualmode-Mobilstation, die sowohl für den Empfang/das Senden von GSM-Signalen als auch für den Empfang/das Senden von UMTS-Signalen oder CDMA-Signalen ausgestaltet ist, die gegebenenfalls auch für einen stationären Betrieb hergerichtet sein kann.

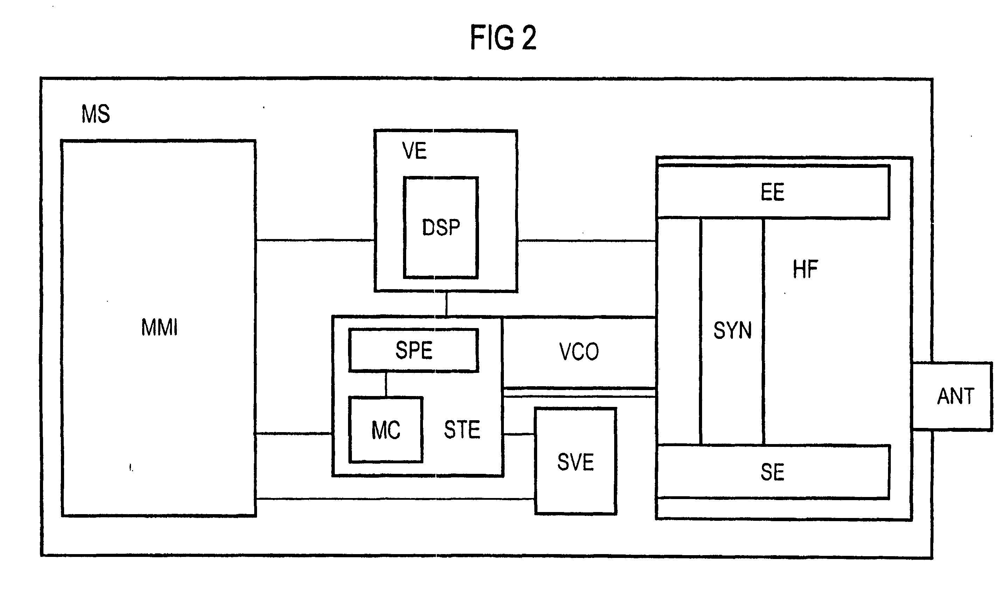

Figur 2 zeigt eine Funkstation, die eine Mobilstation MS sein kann, bestehend aus einer Bedieneinheit MMI, einer Steuereinrichtung STE, einer Verarbeitungseinrichtung VE, einer Stromversorgungseinrichtung SVE, einer Empfangseinrichtung EE und einer Sendeeinrichtung SE.

Die Steuereinrichtung STE besteht im wesentlichen aus einem programmgesteuerten Mikrocontroler MC, der schreibend und lesend auf Speicherbausteine SPE zugreifen kann. Der Microcontroler MC steuert und kontrolliert alle wesentlichen Elemente und Funktionen der Funkstation, steuert im wesentlichen den Kommunikations- und Signalisierungsablauf, reagiert auf Tastatureingaben, indem er die entsprechenden Steuerprozeduren ausführt und ist auch für die Versetzung des Gerätes in unterschiedlich Betriebzustände zuständig.

Die Verarbeitungseinrichtung VE kann auch durch einen digitalen Signalprozessor DSP gebildet sein, der ebenfalls auf Speicherbausteine SPE zugreifen kann.

In den flüchtigen oder nicht flüchtigen Speicherbausteinen SPE sind die Programmdaten, die zur Steuerung der Funkstation und des Kommunikationsablaufs, insbesondere auch der Signalisierungsprozeduren, benötigt werden, Geräteinformationen, vom Benutzer eingegebene Informationen und während der Verarbeitung von Signalen entstehende Informationen gespeichert.

Der Hochfrequenzteil HF besteht aus der Sendeeinrichtung SE, mit einem Modulator und einem Verstärker und einer Empfangseinrichtung EE mit einem Demodulator und ebenfalls einem Verstärker.

Der Sendeeinrichtung SE und der Empfangseinrichtung EE wird über den Synthesizer SYN die Frequenz eines spannungsgeregelten Oszilators VCO zugeführt. Mittels des spannungsgesteuerten Oszillators VCO kann auch der Systemtakt zur Taktung von Prozessoreinrichtungen des Gerätes erzeugt werden.

Zum Empfang und zum Senden von Signalen über die Luftschnittstelle eines Mobilfunksystems ist eine Antenneneinrichtung ANT vorgesehen.

Bei der Funkstation kann es sich auch um eine Basisstation BS handeln. In diesem Fall wird die Bedieneinheit durch eine Verbindung zu einem Mobilfunknetz, beispielsweise über einen Basisstationscontroler BSC bzw. eine Vermittlungseinrichtung MSC ersetzt. Um gleichzeitig Daten mit mehreren Mobilstationen MS auszutauschen, verfügt die Basisstation BS über eine entsprechende Vielzahl von Sende- bzw. Empfangseinrichtungen.

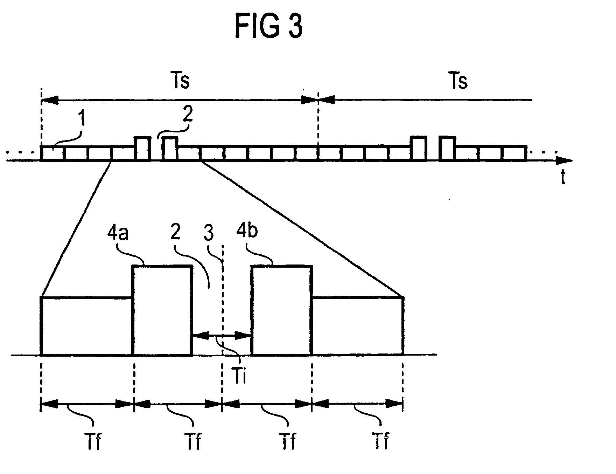

Fig. 3 zeigt die Rahmenstruktur einer Datenübertragung mit geringer Verzögerungszeit, insbesondere der Sprachübertragung in einem UMTS (Universal Mobile Telecommunication System), in dem jeweils innerhalb eines Multirahmens zwölf einzelne Rahmen 1 zur Datenübertragung enthalten sind. Dabei zeigt die Darstellung insbesondere eine Sendephase im Downlink von einer ersten Basisstation BS1, insbesondere einer UMTS-Basisstation BS1 zu einer Mobilstation MS, insbesondere einer Dualmode-Mobilstation MS, die neben dem Empfang von UMTS-Daten auch für den Empfang von GSM-Datenpaketen ausgestaltet ist. Die im folgenden angestellten Ausführungen sind im wesentlichen auf den Downlink beschränkt. Es ist aber selbstverständlich, daß die Erfindung nicht nur in eine Downlink-Übertragung, sondern auch in eine Uplink-Übertragung eingebracht werden kann. Es liegt in Rahmen des fachmännischen Handelns die im folgenden aufgezeigten Ausführungsbeispiele für den Downlink in eine Uplink-übertragung einzubringen.

Die einzelnen Rahmen 1 haben jeweils eine Sendelänge Tf von 10 ms, so daß der Multirahmen insgesamt eine Sendelänge Ts von 120 ms hat. Jeweils der fünfte und der sechste einzelne Rahmen 1 weisen eine gemeinsame, gegebenenfalls ihre Rahmengrenze 3 überlappende Unterbrechungsphase 2 auf, die eine Länge Ti hat. Die Länge Ti beträgt beispielsweise 6 ms. Die Teilabschnitte des ersten Rahmens 4a, der vor der Unterbrechungsphase 2 beginnt, und des zweiten Rahmens 4b, der nach der Unterbrechungsphase 2 endet, sind gleich lang beziehungsweise gleich groß. Bei dem in Fig. 3 gezeigten Ausführungsbeispiel werden Sprachdaten übertragen, so daß eine maximale Verzögerung bei der Auswertung der von der Mobilstation empfangenen Daten in Höhe von 10 ms, das heißt einer Rahmenlänge Tf, akzeptabel ist. Die Daten innerhalb eines Rahmens werden umsortiert, gemeinsam codiert und einander überlagert gesendet. Im Ausführungsbeispiel werden die Senderate des ersten Rahmens 4a und des zweiten Rahmens 4b jeweils derart erhöht, daß die gleiche Menge von zu sendenden Informationen, die in nicht komprimierten Rahmen 1 über die Rahmenlänge Tf hinweg gesendet werden, in einem Zeitraum Tc = Tf - Ti/2 gesendet werden.

Dabei wird während der Unterbrechungsphasen zumindest das Senden von Daten zu einer bestimmten, die Nachbarkanalsuche durchführenden Mobilstation unterbrochen, während das Senden zu anderen Mobilstationen fortgesetzt werden kann, was durch den Einsatz eines Vielfachzugriffsverfahrens, beispielsweise eines CDMA-Verfahrens, ermöglicht wird.

Ein durch die GSM-Basisstation ausgesendeter GSM-Rahmen enthält acht Zeitschlitze, in denen jeweils ein Datenpaket enthalten ist. Die von den GSM-Basisstationen BS2 ausgesendeten Datenpakete, wie z.B. Synchronisationsdatenpakete (zu detektierende Datenpakete, Synchronisationburst), Frequenzkorrekturdatenpakete (charakteristische Datenpakete, Frequencycorrectionburst) und Normaldatenpakete gehorchen alle dem gleichen Zeitraster. Von den GSM-Basisstationen werden 4 mal alle 10 Zeitrahmen (GSM-Rahmen) und daraufhin nach 11 Zeitrahmen (GSM-Rahmen)(insgesamt 51 Zeitrahmen) ein Frequenzkorrekturdatenpaket und jeweils einen Zeitrahmen später ein Synchronisationsdatenpaket ausgesendet.

Beispielsweise während sich die Mobilstation MS im Gesprächszustand oder Nutzdatenübertragungszustand mit einer aktuellen UMTS-Basisstation BS1 befindet, werden die Unterbrechungsphasen zu bestimmten Zeitpunkten/-abschnitten, zwischen denen feste oder unterschiedlich lange Zeiträume liegen können, in die Downlinkübertragung eingefügt, während derer die Empfangseinrichtung der Mobilstation MS auf den Empfang von Datenpaketen von jeweils benachbarten GSM-Basisstationen BS2,BS3 geschaltet wird. Während der Unterbrechungsphase 2 unterbricht also die UMTS-Basisstation das Senden von Daten zur Mobilstation MS und die Mobilstation MS das Empfangen und/oder das Verarbeiten von Daten, die von der UMTS-Basisstation BS1 gesendet werden. Die Mobilstation MS führt mittels der Empfangseinrichtung EE eine Nachbarkanalsuche durch, indem die Steuereinrichtung STE die Empfangseinrichtung EE auf den Empfang von benachbarten GSM-Basisstationen BS2 und die von diesen gesendeten Datenpakete schaltet, um gegebenenfalls auftretende Synchronisationsdatenpakete dp, die von benachbarten GSM-Basisstationen BS2, BS3 gesendet werden, zu empfangen.

Ziel der Nachbarkanalsuche ist auch die Detektion eines zu detektierenden Synchronisationsdatenpaketes. Empfängt bei einer Ausführungsvariante der Erfindung die Mobilstation MS in einer dieser Unterbrechungsphasen ein zu detektierendes Synchronisationsdatenpaket, so ist die Nachbarkanalsuche zumindest hinsichtlich dieser Basisstation BS2 beendet, und die Mobilstation MS sendet entsprechende Steuerinformationen m (SCH-found) gegebenenfalls über geeignete Signalisierungskanäle zur ersten Basisstation BS1, der UMTS-Basisstation. Die UMTS-Basisstation BS1 fügt daraufhin zumindest zunächst keine weiteren Unterbrechungsphasen in den Downlink-Datenstrom d ein.

Die Detektion eines zu detektierenden Synchronisationsdatenpaketes kann auch über den Empfang eines charakteristischen Frequenzkorrekturdatenpaketes, erreicht werden, da aufgrund der bekannten Rahmenstruktur nach dem Empfang eines Frequenzkorrekturdatenpaketes die Lage eines Synchronisationsdatenpaketes bekannt ist. Da im GSM-System die Frequenzkorrekturdatenpakete einen Zeitrahmen vor den Synchronisationsdatenpaketen von den Basisstationen BS2,BS3 ausgesendet werden, kann die Mobilstation MS neben dem Empfang von Synchronisationsdatenpaketen bei einer Ausführungsvariante der Erfindung auch auf den Empfang von Frequenzkorrekturdatenpaketen geschaltet werden. Dabei führt die Mobilstation MS in den Unterbrechungsphasen mittels der Empfangseinrichtung EE eine Nachbarkanalsuche durch, indem die Steuereinrichtung STE die Empfangseinrichtung EE auf den Empfang von benachbarten GSM-Basisstationen BS2 schaltet, um gegebenenfalls auftretende Synchronisationsdatenpakete und Frequenzkorrekturdatenpakete, die von benachbarten GSM-Basisstationen BS2, BS3 gesendet werden, zu empfangen.

Unter dem Begriff "die Mobilstation wird auf den Empfang zu detektierender und charakteristischer Datenpakete geschaltet" versteht man im Rahmen dieser Anmeldung auch, daß nach der üblichen analogen und digitalen Filterung und gegebenenfalls einer Derotation das empfangene Datenpaket sowohl mit der der Trainingssequenz eines charakteristischen Datenpaketes dp als auch mit der der Trainingssequenz eines zu detektierenden Datenpaketes dp entsprechenden Korrelationsfolge verglichen (z.B. korreliert) wird und somit gleichzeitig bzw. parallel nach zu detektierenden und nach charakteristischen Datenpaketen gesucht wird. Statt einer Korrelation können ggf. auch andere Verfahren angewandt werden (z.B. FIR, IRR oder andere Filter).

Bei einer Ausführungsvariante kann die Mobilstation MS nun, nach dem Empfang eines Frequenzkorrekturdatenpaketes, Informationen m zur UMTS-Basisstation BS1 senden(FCCH-found), die bewirken, daß zunächst nur noch eine weitere Unterbrechungsphase in den gesendeten Datenstrom eingelegt wird, um das in einem festen Abstand auf das Frequenzkorrekturdatenpaket folgende Synchronisationsdatenpaket zu empfangen. Aufgrund der Kenntnis über die relative zeitliche Position zwischen Frequenzkorrekturdatenpaket und Synchronisationsdatenpaket können die zeitliche Lage und auch die Dauer (da der Zeitschlitz nun bekannt ist) der einzufügenden Unterbrechungsphase an die zeitliche Lage des zu detektierenden Synchronisationsdatenpaketes angepaßt werden. Entsprechende Informationen über die zeitliche Lage eines Frequenzkorrekturdatenpaketes oder eines folgenden Synchronisationsdatenpaketes können mit der FCCHfound-Nachricht übertragen werden.

Eine andere Ausführungsvariante der Erfindung sieht vor, daß zunächst auf die Beobachtung einer ersten benachbarten GSM-Basisstation BS2 geschaltet wird, nach erfolgreicher Suche oder nach Kenntnis über eine nicht erfolgreiche Suche die Nachbarkanalsuche für eine oder mehrere weitere GSM-Basisstationen BS3 durchgeführt wird, und nach erfolgreicher und/oder erfolgloser Beendigung der Nachbarkanalsuche für mehrere benachbarte GSM-Basisstationen BS2,BS3 Informationen m zur Beeinflussung und/oder Einschränkung und/oder Beendigung und/oder gesteuerten Fortsetzung des Einlegens von Unterbrechungsphasen zur UMTS-Basisstation BS1 übermittelt werden. Dazu können die zunächst ermittelten Ergebnisse der Nachbarkanalsuche mittels Speichereinrichtungen SPE in der Mobilstation MS zwischengespeichert werden.

Eine Ausgestaltung der Erfindung sieht vor, daß für den Fall, daß keine Nachbarkanalsuche erfolgreich ist, dies ebenfalls mittels entsprechender Informationen m signalisiert wird (FCCH/SCH-not-found), woraufhin die UMTS-Basisstation zunächst keine weiteren Unterbrechungsphasen in den Downlink-Datenstrom d einfügt.

Bei einer Weiterbildung der Erfindung werden die Ergebnisse der Nachbarkanalsuche, beispielsweise die Identität der Nachbarbasisstation und die Empfangsqualität oder Feldstärke der von den Nachbarbasisstationen empfangenen Signale zusammen mit den Informationen zur Beeinflussung des Einlegens von Unterbrechungsphasen als eine Nachricht, die gegebenenfalls auf mehrere Rahmen aufgeteilt sein kann, zur UMTS-Basisstation BS1 übermittelt.

Bei einer anderen Ausgestaltungsvariante der Erfindung handelt es sich auch bei der ersten Basisstation BS1 um eine GSM-Basisstation, die Daten gemäß einem GSM-Standard oder einem davon abgeleiteten Standard überträgt.

## Patentansprüche

1. Verfahren zur Datenübertragung in einem Mobilfunksystem, bei dem
- die Daten (d) strukturiert in Rahmen (1, 4a, 4b) von einer ersten Basisstation (BS1) zu einer Mobilstation (MS) übertragen werden,
- zumindest während bestimmter Sendephasen Unterbrechungsphasen (2) eingelegt werden, in denen die Mobilstation (MS) das Empfangen und/oder das Verarbeiten empfangener Daten (d) unterbricht, und in denen die Mobilstation (MS) auf den Empfang von Datenpaketen (dp), die von einer zweiten Basisstation (BS2) gesendet werden, geschaltet wird, und
- in Abhängigkeit von dem Empfangsergebnis Informationen (m) von der Mobilstation (MS) zur ersten Basisstation (BS1) gesendet werden, die das Einlegen von Unterbrechungsphasen beeinflussen.

2. Verfahren zur Datenübertragung in einem Mobilfunksystem, bei dem
- die Daten (d) strukturiert in Rahmen (1, 4a, 4b) von einer Mobilstation (MS) zu einer ersten Basisstation (BS1) übertragen werden,
- zumindest während bestimmter Sendephasen Unterbrechungsphasen (2) eingelegt werden, in denen die Mobilstation (MS) das Senden von Daten (d) unterbricht, und in denen die Mobilstation (MS) auf den Empfang von Datenpaketen (dp), die von einer zweiten Basisstation (BS2) gesendet werden, geschaltet wird, und
- in Abhängigkeit von dem Empfangsergebnis Informationen (m) von der Mobilstation (MS) zur ersten Basisstation (BS1) gesendet werden, die das Einlegen von Unterbrechungsphasen beeinflussen.

3. Verfahren nach Anspruch 2, bei dem
- Daten (d) zwischen der ersten Basisstation und zumindest einer Mobilstation (MS) gemäß einem ersten Übertragungsverfahren übertragen werden,
- zumindest während bestimmter Übertragungsphasen Unterbrechungsphasen (2) eingelegt werden, in denen die Mobilstation (MS) das Übertragen von Daten (d) unterbricht, und in denen die Mobilstation (MS) auf den Empfang von Datenpaketen (dp), die von einer zweiten Basisstation (BS2) gemäß einem zweiten Übertragungsverfahren gesendet werden, geschaltet wird.

4. Verfahren nach einem der vorhergehenden Ansprüche, bei dem nach dem Empfang eines zu detektierenden Datenpaketes Informationen (m) von der Mobilstation (MS) zur ersten Basisstation (BS1) gesendet werden, die bewirken, daß keine Unterbrechungsphasen mehr eingefügt werden.

5. Verfahren nach einem der vorhergehenden Ansprüche, bei dem nach dem Empfang eines charakteristischen Datenpaketes Informationen (m) von der Mobilstation (MS) zur ersten Basisstation (BS1) gesendet werden, die bewirken, daß nach dem Empfang eines folgenden zu detektierenden Datenpaketes keine Unterbrechungsphasen mehr eingefügt werden.

6. Verfahren nach einem der vorhergehenden Ansprüche, bei dem nach dem Empfang eines charakteristischen Datenpaketes Informationen (m) von der Mobilstation (MS) zur ersten Basisstation (BS1) gesendet werden, die bewirken, daß nach einem vorgegebenen Zeitabstand der zwischen charakteristischen Datenpaketen und zu detektierenden Datenpaketen liegt, noch eine Unterbrechungsphase zum Empfang des zu detektierenden Datenpaketes eingefügt wird.

7. Verfahren nach einem der vorhergehenden Ansprüche, bei dem
- die Mobilstation (MS) nach dem Empfang eines charakteristischen Datenpaketes und/oder eines zu detektierenden Datenpaketes einer zweiten Basisstation (BS2) auf den Empfang eines charakteristischen Datenpaketes und/oder eines zu detektierenden Datenpaketes einer oder mehrerer dritter Basisstationen (BS3) geschaltet wird, und
- nach dem Empfang eines charakteristischen Datenpaketes und/oder eines zu detektierenden Datenpaketes keiner, einer oder mehrerer dritter Basisstationen Informationen (m) von der Mobilstation (MS) zur ersten Basisstation (BS1) übermittelt werden zur Beeinflussung des Einlegens der Unterbrechungsphasen und/oder zur Übermittlung von Informationen über zweite und/oder dritte Basisstationen.

8. Verfahren nach einem der vorhergehenden Ansprüche, bei dem die von der Mobilstation (MS) in einem vorgegebenen Zeitraum von einer zweiten Basisstation (BS2) empfangenen Datenpakete in einem Speicher (SPE) gespeichert und/oder ausgewertet werden.

9. Verfahren nach einem der vorhergehenden Ansprüche, bei dem Informationen zur Beeinflussung des Einlegens der Unterbrechungsphasen und Informationen über zweite und/oder dritte Basisstationen mittels derselben Nachricht übermittelt werden.

10. Verfahren nach einem der vorhergehenden Ansprüche, bei dem
die zweiten und/oder dritten Basisstationen Basisstationen eines GSM-Mobilfunksystems oder eines davon abgeleiteten Systems sind und die zu detektierenden Datenpakte Synchronisationsdatenpakte und die charakteristischen Datenpakete Frequenzkorrekturdatenpakete sind.

11. Mobilstation (MS) mit
- Mitteln (EE) zum Empfang von Daten, die in Rahmen strukturiert von einer ersten Basisstation (BS1) gesendet werden,
- Mitteln (STE) zum Einlegen von Pausen zumindest während bestimmter Empfangsphasen, in denen das Empfangen und/oder das Verarbeiten empfangener Daten unterbrochen wird,
- Mitteln (STE) zum Schalten auf den Empfang von Datenpaketen, die von einer zweiten Basisstationen (BS2) gesendet werden,
- Mitteln (VE) zur Ermittlung eines Empfangsergebnisses bezüglich dieser Datenpakete, und
- Mitteln (SE) zum Senden von Informationen zur ersten Basisstation (BS1), die das Einlegen von Unterbrechungsphasen in Abhängigkeit von dem Empfangsergebnis der Mobilstation MS beeinflussen.

12. Mobilstation (MS) mit
- Mitteln (EE) zum Senden von Daten, die in Rahmen strukturiert zu einer ersten Basisstation (BS1) gesendet werden,
- Mitteln (STE) zum Einlegen von Pausen zumindest während bestimmter Sendephasen, in denen das Senden von Daten unterbrochen wird,
- Mitteln (STE) zum Schalten auf den Empfang von Datenpaketen, die von einer zweiten Basisstationen (BS2) gesendet werden,
- Mitteln (VE) zur Ermittlung eines Empfangsergebnisses bezüglich dieser Datenpakete, und
- Mitteln (SE) zum Senden von Informationen zur ersten Basisstation (BS1), die das Einlegen von Unterbrechungsphasen in Abhängigkeit von einem Empfangsergebnis der Mobilstation MS beeinflussen.

13. Mobilstation (MS) nach Anspruch 12 mit
- Mitteln (EE,SE) zum Übertragen von Daten von und zu der ersten Basisstation gemäß einem ersten Übertragungsverfahren,
- Mitteln (STE) zum Einlegen von Pausen zumindest während bestimmter Übertragungsphasen, in denen das Übertragen von Daten unterbrochen wird,
Mitteln (STE) zum Schalten auf den Empfang von Datenpaketen, die von einer zweiten Basisstationen (BS2) gemäß einem zweiten Übertragungsverfahren gesendet werden.

14. Mobilstation (MS) nach einem der Ansprüche 11 bis 13, mit Mitteln (SE) zum Senden von Informationen zur ersten Basisstation, die bewirken, daß keine Unterbrechungsphasen mehr eingefügt werden.

15. Mobilstation (MS) nach einem der Ansprüche 11 bis 14, mit Mitteln (SE) zum Senden von Informationen zur ersten Basisstation, die bewirken, daß nach dem Empfang eines folgenden zu detektierenden Datenpaketes keine Unterbrechungsphasen mehr eingefügt werden.

16. Mobilstation (MS) nach einem der Ansprüche 11 bis 15, mit Mitteln (SE) zum Senden von Informationen zur ersten Basisstation, die bewirken, daß nach einem vorgegebenen Zeitabstand, der zwischen charakteristischen Datenpaketen und zu detektierenden Datenpaketen liegt, noch eine Unterbrechungsphase zum Empfang des zu detektierenden Datenpaketes eingefügt wird.

17. Mobilstation (MS) nach einem der Ansprüche 11 bis 16, mit
- Mitteln (STE) zum Schalten auf den Empfang eines charakteristischen Datenpaketes und/oder eines zu detektierenden Datenpaketes einer oder mehrerer dritter Basisstationen nach dem Empfang eines charakteristischen Datenpaketes und/oder eines zu detektierenden Datenpaketes einer zweiten Basisstation, und
- Mitteln (SE) zum Senden von Informationen zur ersten Basisstation zur Beeinflussung des Einlegens der Unterbrechungsphasen und/oder zur Übermittlung von Informationen über zweite und/oder dritte Basisstationen nach dem Empfang eines charakteristischen Datenpaketes und/oder eines zu detektierenden Datenpaketes keiner, einer oder mehrerer dritter Basisstationen.

18. Mobilstation (MS) nach einem der Ansprüche 11 bis 17, mit Mitteln (SPE,VE) zur Speicherung und/oder Auswertung von Datenpaketen, die in einem vorgegebenen Zeitraum von einer zweiten Basisstation empfangenen werden.

19. Basisstation (BS1) mit
- Mitteln zum Senden von Daten strukturiert in Rahmen (1, 4a, 4b) zu einer Mobilstation (MS),
- Mitteln zum Einlegen von Unterbrechungsphasen zumindest während bestimmter Sendephasen (2),
- Mitteln zum Empfang von Informationen, die das Einlegen von Unterbrechungsphasen beeinflussen,
- Mitteln zur Beeinflussung des Einlegens von Unterbrechungsphasen in Abhängigkeit von einem Empfangsergebnis der Mobilstation.

20. Basisstation (BS1) mit
- Mitteln zum Empfangen von Daten strukturiert in Rahmen (1, 4a, 4b) zu einer Mobilstation (MS),
- Mitteln zum Einlegen von Unterbrechungsphasen zumindest während bestimmter Empfangsphasen (2),
- Mitteln zum Empfang von Informationen, die das Einlegen von Unterbrechungsphasen beeinflussen,
- Mitteln zur Beeinflussung des Einlegens von Unterbrechungsphasen in Abhängigkeit von einem Empfangsergebnis der Mobilstation.

21. Basisstation (BS1) nach Anspruch 20 mit
- Mitteln zum Übertragen von Daten von und zu einer Mobilstation (MS),
- Mitteln zum Einlegen von Unterbrechungsphasen zumindest während bestimmter Übertragungsphasen (2).

22. Basisstation (BS1) nach einem der Ansprüche 19 bis 21, mit
Mitteln zum Empfangen und Verarbeiten von Informationen, die bewirken, daß keine Unterbrechungsphasen mehr eingefügt werden.

23. Basisstation (BS1) nach einem der Ansprüche 19 bis 22, mit
Mitteln zum Empfangen und Verarbeiten von Informationen, die bewirken, daß nach dem Empfang eines folgenden zu detektierenden Datenpaketes keine Unterbrechungsphasen mehr eingefügt werden.

24. Basisstation (BS1) nach einem der Ansprüche 19 bis 23, mit
Mitteln zum Empfangen und Verarbeiten von Informationen, die bewirken, daß nach einem vorgegebenen Zeitabstand der zwischen charakteristischen Datenpaketen und zu detektierenden Datenpaketen liegt, noch eine Unterbrechungsphase zum Empfang des zu detektierenden Datenpaketes eingefügt wird.

25. Basisstation (BS1) nach einem der Ansprüche 19 bis 24, mit
Mitteln zum Empfangen und Verarbeiten von Informationen zur Beeinflussung des Einlegens der Unterbrechungsphasen und/oder von Informationen über zweite und/oder dritte Basisstationen.

## Claims

1. Method for data transmission in a mobile radio system, in which
- the data (d) is transmitted in a structured form in frames (1, 4a, 4b) from a first base station (BS1) to a mobile station (MS),
- interruption phases (2) are inserted at least during specific transmission phases, during which interruption phases (2) the mobile station (MS) interrupts the reception and/or the processing of received data (d), and in which the mobile station (MS) is switched to receive data packets (dp) which are transmitted from a second base station (BS2), and
- information (m) which influences the insertion of interruption phases is transmitted from the mobile station (MS) to the first base station (BS1) as a function of the reception result.

2. Method for data transmission in a mobile radio system, in which
- the data (d) is transmitted in a structured form in frames (1, 4a, 4b) from a mobile station (MS) to a first base station (BS1),
- interruption phases (2) are inserted at least during specific transmission phases, into which interruption phases (2) the mobile station (MS) interrupts the transmission of data (d), and in which the mobile station (MS) is switched to receive data packets (dp) which are transmitted from a second base station (BS2), and
- information (m) which influences the insertion of interruption phases is transmitted from the mobile station (MS) to the first base station (BS1) as a function of the reception result.

3. Method according to Claim 2, in which
- data (d) is transmitted between the first base station and at least one mobile station (MS) using a first transmission method,
- interruption phases (2) are inserted at least during specific transmission phases, into which interruption phases (2) the mobile station (MS) interrupts the transmission of data (d), and in which the mobile station (MS) is switched to receive data packets (dp) which are transmitted from a second base station (BS2) using a second transmission method.

4. Method according to one of the preceding claims, in which, after receiving a data packet that is to be detected, information (m) which results in no more interruption phases being inserted is transmitted from the mobile station (MS) to the first base station (BS1).

5. Method according to one of the preceding claims, in which, after receiving a characteristic data packet, information (m) which results in no more interruption phases being inserted after reception of a subsequent data packet that is to be detected is transmitted from the mobile station (MS) to the first base station (BS1).

6. Method according to one of the preceding claims, in which, after receiving a characteristic data packet, information (m) which results in an interruption phase for reception the data packet which is to be detected also being inserted after a predetermined time interval which is located between characteristic data packets and data packets which are to be detected, is transmitted from the mobile station (MS) to the first base station (BS1).

7. Method according to one of the preceding claims, in which
- after receiving a characteristic data packet and/or a data packet which is to be detected, from a second base station (BS2), the mobile station (MS) is switched to receive a characteristic data packet and/or a data packet which is to be detected, from one or more third base stations (BS3), and
- after receiving a characteristic data packet and/or a data packet which is to be detected from no third base station or from one or more third base stations, information (m) is transmitted from the mobile station (MS) to the first base station (BS1) in order to influence the insertion of the interruption phases and/or in order to transmit information via second and/or third base stations.

8. Method according to one of the preceding claims, in which the data packets which are received by the mobile station (MS) from a second base station (BS2) in a predetermined time period are stored and/or evaluated in a memory (SPE).

9. Method according to one of the preceding claims, in which information for influencing the insertion of the interruption phases and information about second and/or third base stations are transmitted by means of the same message.

10. Method according to one of the preceding claims, in which
the second and/or third base stations are base stations in a GSM mobile radio system or in a system which is derived from such a system, and the data packets which are to be detected are synchronisation data packets, and the characteristic data packets are frequency correction data packets.

11. Mobile station (MS) having
- means (EE) for reception of data which is transmitted in frames and in a structured manner from a first base station (BS1),
- means (STE) for the insertion of pauses at least during specific reception phases, in which the reception and/or the processing of received data are/is interrupted,
- means (STE) for switching to receive data packets which are transmitted from a second base station (BS2),
- means (VE) for determining a reception result with regard to these data packets, and
- means (SE) for transmission of information to the first base station (BS1), which information influences the insertion of interruption phases as a function of the reception result at the mobile station (MS).

12. Mobile station (MS) having
- means (EE) for transmission of data which is transmitted in frames and in a structured manner to a first base station (BS1),
- means (STE) for insertion of pauses at least during specific transmission phases, in which the transmission of data is interrupted,
- means (STE) for switching to receive data packets which are transmitted from a second base station (BS2),
- means (VE) for determination of a reception result with regard to these data packets, and
- means (SE) for transmission of information to the first base station (BS1), which information influences the insertion of interruption phases as a function of a reception result in the mobile station (MS).

13. Mobile station (MS) according to Claim 12, having
- means (EE, SE) for transmission of data from and to the first base station using a first transmission method,
- means (STE) for insertion of pauses at least during specific interruption phases, in which the transmission of data is interrupted,
- means (STE) for switching to receive data packets which are transmitted from a second base station (BS2) using a second transmission method.

14. Mobile station (MS) according to Claims 11 to 13, having
means (SE) for transmission of information to the first base station, which information results in no more interruption phases being inserted.

15. Mobile station (MS) according to one of Claims 11 to 14, having means (SE) for transmission of information to the first base station, which information results in no more interruption phases being inserted after the reception of a subsequent data packet which is to be detected.

16. Mobile station (MS) according to one of Claims 11 to 15, having means (SE) for transmission of information to the first base station, which information results in an interruption phase for reception of the data packet which is to be detected also being inserted after a predetermined time interval, which is located between characteristic data packets and data packets which are to be detected.

17. Mobile station (MS) according to one of Claims 11 to 16, having
- means (STE) for switching to receive a characteristic data packet and/or a data packet which is to be detected, from one or more third base stations after reception of a characteristic data packet and/or a data packet which is to be detected, from a second base station, and
- means (SE) for transmission of information to the first base station in order to influence the insertion of the interruption phases and/or in order to transmit information via second and/or third base stations after reception of a characteristic data packet and/or of a data packet, which is to be detected, from no third base stations, or from one or more third base stations.

18. Mobile station (MS) according to one of Claims 11 to 17, having means (SPE, VE) for storage and/or for evaluation of data packets which are received from a second base station in a predetermined time period.

19. Base station (BS1), having
- means for transmission of data structured in frames (1, 4a, 4b) to a mobile station (MS),
- means for insertion of interruption phases at least during specific transmission phases (2),
- means for reception of information which influences the insertion of interruption phases,
- means for influencing the insertion of interruption phases as a function of a reception result in the mobile station.

20. Base station (BS1), having
- means for reception of data structured in frames (1, 4a, 4b) to a mobile station (MS),
- means for insertion of interruption phases at least during specific reception phases (2),
- means for reception of information which influences the insertion of interruption phases,
- means for influencing the insertion of interruption phases as a function of a reception result in the mobile station.

21. Base station (BS1) according to Claim 20, having
- means for transmission of data from and to a mobile station (MS),
- means for insertion of interruption phases at least during specific transmission phases (2).

22. Base station (BS1) according to one of Claims 19 to 21, having
means for reception and processing of information, which results in no more interruption phases being inserted.

23. Base station (BS1) according to one of Claims 19 to 22, having
means for reception and processing of information, which results in no more interruption phases being inserted after reception of a subsequent data packet which is to be detected.

24. Base station (BS1) according to one of Claims 19 to 23, having
means for reception and processing of information, which results in an interruption phase for reception of the data packet which is to be detected also being inserted after a predetermined time interval which is located between characteristic data packets and data packets which are to be detected.

25. Base station (BS1) according to one of Claims 19 to 24, having
means for reception and processing of information, in order to influence the insertion of interruption phases and/or of information about second and/or third base stations.

## Revendications

1. Procédé de transmission de données dans un système de radiocommunication mobile, selon lequel,
- les données (d) sont transmises structurées en trames (1, 4a, 4b) d'une première station de base (BS1) à une station mobile (MS).
- des phases d'interruption (2) pendant lesquelles la station mobile (MS) interrompt la réception et/ou le traitement de données reçues (d) et est commutée sur la réception de paquets de données (dp) qui peuvent être émis depuis une deuxième station de base (BS2), sont positionnées au moins pendant certaines phases d'émission et
- des informations (m) influençant le positionnement des phases d'interruption sont envoyées depuis la station mobile (MS) à la première station de base (BS1), en fonction du résultat de la réception.

2. Procédé de transmission de données dans un système de radiocommunication mobile, selon lequel
- les données (d) sont transmises, structurées en trames (1, 4a, 4b) d'une station mobile (MS) à une première station de base (BS1),
- des phases d'interruption (2) pendant lesquelles la station mobile (MS) interrompt l'émission de données (d) et est commutée sur la réception de paquets de données (dp) qui sont émis depuis une deuxième station de base (BS2), sont positionnées au moins pendant certaines phases d'émission, et
- des informations (m) influençant le positionnement des phases d'interruption sont envoyées depuis la station mobile (MS) à la première station de base (BS1), en fonction du résultat de la réception.

3. Procédé selon la revendication 2, selon lequel
- des données (d) sont transmises selon un premier procédé de transmission, entre la première station de base et au moins une station mobile (MS),
- des phases d'interruption (2) pendant lesquelles la station mobile (MS) interrompt la transmission de données (d) et est commutée sur la réception de paquets de données (dp) qui sont émis depuis une deuxième station de base (BS2) conformément à un deuxième procédé de transmission, sont positionnées pendant certaines phases de transmission définies.

4. Procédé selon l'une des revendications précédentes, selon lequel, après la réception d'un paquet de données à détecter, des informations (m) sont envoyées depuis la station mobile (MS) à la première station de base (BS1), empêchant désormais le positionnement de phases d'interruption.

5. Procédé selon l'une des revendications précédentes, selon lequel, après la réception d'un paquet de données caractéristique, des informations (m) sont envoyées depuis la station mobile (MS) à la première station de base (BS1), empêchant désormais l'insertion de phases d'interruption après la réception du paquet de données à détecter suivant,

6. Procédé selon l'une des revendications précédentes, selon lequel, après la réception d'un paquet de données caractéristique, des informations (m) sont envoyées depuis la station mobile (MS) à la première station de base (BS1), empêchant qu'une phase d'interruption permettant de recevoir le paquet de données à détecter, soit encore insérée après un intervalle de temps spécifié entre des paquets de données caractéristiques et des paquets de données à détecter,

7. Procédé selon l'une des revendications précédentes, selon lequel
- après la réception d'un paquet de données caractéristique et/ou d'un paquet de données à détecter d'une deuxième station de base (BS2), la station mobile (MS) est commutée sur la réception d'un paquet de données caractéristique et/ou d'un paquet de données à détecter d'une ou de plusieurs des troisièmes stations de base (BS3), et
- après la réception d'un paquet de données caractéristique et/ou d'un paquet de données à détecter ne provenant d'aucune des troisièmes stations de base ou provenant d'une ou de plusieurs des troisièmes stations de base, des informations (m) sont transmises de la station mobile (MS) à la première station de base (BS1) pour influencer le positionnement des phases d'interruption et/ou pour transmettre des informations sur les deuxièmes et/ou troisièmes stations de base.

8. Procédé selon l'une des revendications précédentes, selon lequel les paquets de données reçus d'une deuxième station de base (BS2) par la station mobile (MS) dans un laps de temps spécifié sont sauvegardés dans une mémoire (SPE) et/ou analysés,

9. Procédé selon l'une des revendications précédentes, selon lequel des informations influençant le positionnement des phases d'interruption et des informations sur les deuxièmes et/ou troisièmes stations de base sont transmises par la même liaison,

10. Procédé selon lequel
les deuxièmes et/ou troisièmes stations de base sont des stations de base d'un système de radiocommunication mobile GSM ou d'un système dérivé, les paquets de données à détecter sont des paquets de synchronisation et les paquets de données caractéristiques sont des paquets de données de correction de fréquence.

11. Station mobile (MS) équipée de
- moyens (EE) pour recevoir des données qui sont émises, structurées en trames, par une première station de base (BS1),
- moyens (STE) pour positionner des pauses au moins pendant des phases de réception définies, pendant lesquelles la réception et/ou le traitement de données reçues est interrompu(e),
- moyens (STE) pour commuter sur la réception de paquets de données émis par l'une des deuxièmes stations de base (BS2),
- moyens (VE) pour obtenir le résultat de la réception de ces paquets de données, et
- moyens (SE) pour émettre vers la première station de base (BS1) des informations qui influencent le positionnement de phases d'interruption en fonction du résultat de la réception de la station mobile MS.

12. Station mobile (MS) équipée de
- moyens (EE) pour émettre des données qui sont émises, structurées en trames vers une première station de base (BS1),
- moyens (STE) pour positionner des pauses au moins pendant certaines phases d'émission au cours desquelles l'émission de données est interrompue,
- moyens (STE) pour commuter sur la réception de paquets de données qui sont émis par une deuxième station de base (BS2),
- moyens (VE) pour obtenir un résultat de réception de ces paquets de données, et
- moyens (SE) pour émettre vers une première station de base (BS1) des informations qui influencent le positionnement de phases d'interruption en fonction d'un résultat de réception de la station mobile MS.

13. Station mobile (MS) selon la revendication 12 équipée de
- moyens (EE, SE) pour transmettre des données depuis et vers la première station de base selon un premier procédé de transmission,
- moyens (STE) pour positionner des pauses, au moins pendant certaines phases de transmission définies, au cours desquelles la transmission de données est interrompue,
- moyens (STE) pour commuter sur la réception de paquets de données qui sont émis par une deuxième station de base (BS2) conformément à un deuxième procédé de transmission.

14. Station mobile (MS) selon l'une des revendications 11 à 13, équipée de moyens (SE) pour émettre des informations vers la première station de base, empêchant que des phases d'interruption soient désormais insérées.

15. Station mobile (MS) selon l'une des revendications 11 à 14, équipée de moyens (SE) pour émettre des informations vers la première station de base, empêchant que des phases d'interruption soient insérées après la réception du paquet de données à détecter suivant.

16. Station mobile (MS) selon l'une des revendications 11 à 15, équipée de moyens (SE) pour émettre des informations vers la première station de base, empêchant d'insérer encore une phase d'interruption pour recevoir le paquet de données à détecter, après un intervalle de temps spécifié entre des paquets de données caractéristiques et des paquets de données à détecter.

17. Station mobile (MS) selon l'une des revendications 11 à 16, équipée de
- moyens (STE) pour commuter sur la réception d'un paquet de données caractéristique et/ou d'un paquet de données à détecter d'une ou de plusieurs des troisièmes stations, après la réception d'un paquet de données caractéristique et/ou d'un paquet de données à détecter d'une deuxième station de base, et de
- moyens (SE) pour émettre des informations vers la première station de base pour influencer le positionnement des phases d'interruption et/ou pour transmettre des informations par les deuxièmes et/ou les troisièmes stations de base après la réception d'un paquet de données caractéristique et/ou d'un paquet de données à détecter ne provenant pas d'une station de base, ou provenant d'une ou de plusieurs stations de base.

18. Station mobile (MS) selon l'une des revendications 11 à 17, équipée de moyens (SPE,VE) pour mettre en mémoire et/ou analyser des paquets de données qui sont reçus par une deuxième station de base dans un laps de temps spécifié.

19. Station de base (BS1) équipée de
- moyens pour émettre des données structurées en trames (1, 4a, 4b) vers une station mobile (MS),
- moyens pour positionner des phases d'interruption, au moins pendant certaines phases d'émission (2),
- moyens pour recevoir des informations influençant le positionnement de phases d'interruption,
- moyens pour influencer le positionnement de phases d'interruption, en fonction d'un résultat de réception de la station mobile.

20. Station de base (BS1) équipée de
- moyens pour recevoir des données structurées en trames (1, 4a, 4b) vers une station mobile (MS),
- moyens pour positionner des phases d'interruption, au moins pendant certaines phases de réception (2),
- moyens pour recevoir des informations influençant la positionnement de phases d'interruption,
- moyens pour influencer le positionnement de phases d'interruption en fonction d'un résultat de réception de la station mobile.

21. Station de base (BS1) selon la revendication 20 équipée de
- moyens pour transmettre des données depuis et vers une station mobile (MS),
- moyens pour positionner des phases d'interruption, au moins pendant certaines phases de transmission (2).

22. Station de base (BS1) selon l'une des revendications 19 à 21, équipée de moyens pour recevoir et de traiter des informations empêchant que des phases d'interruption soient désormais insérées.

23. Station de base (BS1) selon l'une des revendications 19 à 22 équipée de moyens pour recevoir et traiter des informations empêchant que des phases d'interruption soient insérées après la réception du paquet de données à détecter suivant.

24. Station de base (BS1) selon l'une des revendications 19 à 23, équipée de moyens pour recevoir et traiter des informations empêchant qu'une phase d'interruption permettant de recevoir le paquet de données à détecter soit encore inséré après un laps de temps spécifié entre des paquets de données caractéristiques et des paquets de données à détecter.

25. Station de base (BS1) équipée de
moyens pour recevoir et traiter des informations pour influencer le positionnement des phases d'interruption et/ou d'informations par l'intermédiaire de deuxièmes et/ou de troisièmes stations de base.
